Europäisches Patentamt

European Patent Office

Office européen des brevets

(11) Publication number: **0 236 004**
**A1**

## EUROPEAN PATENT APPLICATION

(21) Application number: **87301348.6**

(22) Date of filing: **17.02.87**

(51) Int. Cl.⁴: **B 23 D 31/00**

(30) Priority: **18.02.86 US 830364**

(43) Date of publication of application: **09.09.87**
**Bulletin 87/37**

(84) Designated Contracting States: **AT BE CH DE ES FR GB GR IT LI NL SE**

(71) Applicant: **ADOLPH COORS COMPANY,**
**17755 West 32nd Avenue, Golden Colorado 80401 (US)**

(72) Inventor: **Hahn, Roger Alan, 6469 Iris Street,**
**Arvada,Colorado (US)**
Inventor: **Schultz,Robert Herman, 9519 Field Court,**
**Broomfield Colorado (US)**

(74) Representative: **Baillie, Iain Cameron et al, c/o Ladas &**
**Parry Isartorplatz 5, D-8000 München 2 (DE)**

(54) **Apparatus and method for trimming a can body.**

(57) A system for trimming a can body (12) wherein a can body (12) is positioned within a cutting member (26) so that the cutting member (26) is at the location where the can body (12) is to be trimmed. A resilient, deformable object (30) is inserted into the can body (12) and positioned therein so that at least a portion thereof is located radially opposite portions of the can body (12) on each side of the cutting member. The resilient, deformable object is deformed so as to move the portion of the can body located between the cutting member and the open end of the can body in a radially outward direction so as to sever that portion (46) from the can body.

## APPARATUS AND METHOD FOR
## TRIMMING A CAN BODY

This invention relates generally to the manufacture of can bodies for use as containers, such as beverage containers, and more particularly to the portion of the manufacturing operation wherein the end of the can body is trimmed to form a can body of proper dimensions.

In the manufacture of cans for use as containers, such as beverage containers and particularly when the cans are formed from aluminum, the manufacturing processes generally employed produce a can body which at one stage has a longitudinal length greater than that desired for future operations to form a finished can body ready to receive an end cap. Therefore, it is necessary that a portion of the sidewall of the can body be removed so as to produce a can body having a proper longitudinal length. The most conventional methods for trimming a portion of the can body utilize knives or cutting edges in various ways in which there is relative rotation between the can body and the cutting edge. Although these methods are used in commercial operations, there are problems associated with these methods, many of which are associated with the relative rotation between the can body and the cutting edge.

This invention provides apparatus and

CASE: ACC. 85-50

method for trimming away a portion of a can body adjacent the open can end. In accordance with the invention, a can body is positioned within a cutting edge so that the cutting edge is located adjacent to the circle along which the can body is to be trimmed, which circle is spaced a distance away from the open end of the can body. A resilient, deformable object, formed from a material such as urethane or other similar materials, is positioned within the can body with at least a portion thereof located radially opposite said cutting edge. A force is applied to the resilient, deformable object so as to deform said resilient, deformable object in a radially outward direction so as to move the portion of the can body between the circle and the open end of the can body in a radially outward direction so as to sever the portion from the can body.

In a preferred embodiment of the invention, a conventional starwheel having a plurality of spaced apart turrets located around its circumference is rotated about an axis so that an untrimmed can body enters one turret at one location and exits as a trimmed can from the same turret at another location. As the starwheel rotates, the can body and the associated apparatus in each turret are moved through a series of operations so as to sever the portion away from the can body. Each untrimmed can body is fed into a starwheel turret and positioned on a vacuum chuck locator. A cutting member is mounted in a fixed position in each turret. As the turret rotates, means are provided to move the can body into and out of a location within the cutting member at which location the cutting member is radially opposite a circle spaced from the open end of the can body and along which the can body is to be trimmed. Means are provided on each turret for mounting a resilient, deformable object so that it may be moved into and out of a location within the can body as the turret is rotated whereat at least a portion of the resilient, deformable object is radially opposite the cutting member. As the turret rotates, means are provided to apply a force on the resilient, deformable object so as to deform at least a portion of the resilient, deformable object radially outward into contact with the adjacent inner surface of the can body. Sufficient force is applied to deform the resilient, deformable object so that the portion of the can body between the circle and the open end is moved in a radially outward direction so that the cutting member severs the portion away from the can body. Means are provided for restraining movement of the remaining portion of the can body during the trimming operation.

According to this invention there is provided an apparatus for trimming away a portion of a can body adjacent its open end comprising: a cutting member having an upper surface, a lower surface and an opening having a generally cylindrical inner surface extending therebetween; a generally circular cutting edge formed at the intersection of said generally cylindrical inner surface and said upper surface, support means for positioning a can body having an open end and a closed end and a longitudinal axis within said cutting member so that the portion of said can body to be trimmed away projects upwardly from said upper surface and the next adjacent portion of said can body is radially opposite said generally cylindrical inner surface and for supporting said can body in such position; a resilient, deformable object; mounting means on which said resilient, deformable object is mounted; said mounting means having a longitudinal axis; force applying means having a longitudinal axis; said mounting means attached to said force applying means for movement

-4-

therewith but to permit relative longitudinal movement therebetween; moving means for moving said force applying means and therefore also said mounting means toward said can body so that said mounting means moves into said can body;

movement limiting means to stop the movement of said mounting means to position said resilient, deformable object within said can body so that portions of said resilient, deformable object are radially opposite to said portion of said can body to be trimmed away, said cutting edge and at least a portion of said next adjacent portion;

said moving means continuing the movement of said force applying means to apply a force to deform said resilient, deformable object in radially outward directions to force said at least a portion of said next adjacent portion against said generally cylindrical inner surface so as to prevent longitudinal movement thereof and to force said portion of said can body to be trimmed away against and over said cutting edge to trim it from the can body; and

said moving means moving said force applying means in a direction away from said can body and relative to said mounting means so that said resilient, deformable object will resile to its original shape and then moving said mounting means therewith so as to remove said mounting means out of said can body.

Fig. 1 is a schematic illustration of a preferred embodiment of the invention;

Figs. 2, 4 and 5 are enlarged elevational views with parts in section illustrating the relative location of the various parts of the apparatus at different stages of the trimming operation;

Fig. 3 is a cross-sectional view along the line 3-3 of Fig. 2;

Fig. 6 is a cross-sectional view of another embodiment of the invention; and

Fig. 7 is a cross-sectional view of a further embodiment of the invention.

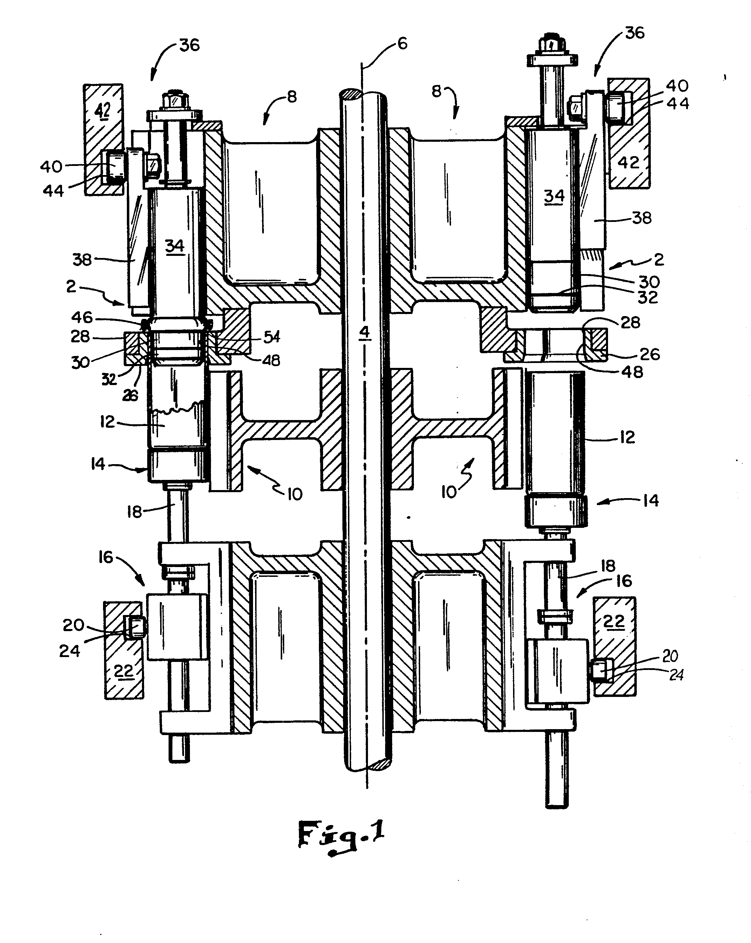

A preferred embodiment of the invention is schematically illustrated in Fig. 1 and comprises a starwheel 2 secured to a shaft 4 for rotation therewith around the longitudinal axis 6 of the shaft 4. In Fig. 1, the longitudinal axis 6 extends in the vertical direction but it is understood that this is for illustration purposes only and that the longitudinal axis 6 may extend in other directions within the spirit of this invention. The starwheel 2 has a plurality of circumferentially spaced apart turrets 8 generally about eight in number (not shown). Each turret 8 has pocket means 10 for receiving a can body 12 and a vacuum chuck can locator means 14. Means 16 are provided for reciprocating the vacuum chuck can locator means 14 and therefore the can body 12 in directions generally parallel to the longitudinal axis 6 of the shaft 4. The means 16 comprises a shaft 18 secured to the vacuum chuck can locator 14, a rotatable cam follower 20 mounted on the shaft 18 and a barrel cam 22 having a cam surface 24 for guiding the movement of the rotatable cam follower 20. A cutting member 26 having a cutting edge 28 is secured in a fixed position on each turret 8.

A resilient, deformable object 30 is mounted in a recess 32 formed in an elongated member 34. Means 36 are provided for reciprocating the elongated member 34 in directions generally parallel to the longitudinal axis 6 of the shaft 4. The means 36 comprises a member 38 secured to the elongated member 34, a rotatable cam follower 40 mounted on the member 38 and a barrel cam 42 having a cam surface 44 for guiding the movement of the rotatable cam follower 40. Means, to be described below, are provided to apply a force to the resilient, deformable object 30 so as to deform the resilient, deformable object 30 in a radially outward direction. As illustrated on the left hand side of Fig. 1, the resilient, deformable object 30 has been deformed radially outward a sufficient distance so as to sever the portion 46 away from the can body 12. Also, as the resilient, deformable body 30 is deformed radially outward, it moves a portion of the can body into contact with the cylindrical inner surface 48 of the cutting member 26 so as to restrain movement of the remaining portion of the can body 12 during the trimming operation and to ensure that the open end 54 of the trimmed can body 12 is substantially perfectly round. After the portion 46 has been severed, the starwheel continues to rotate and moves the turret to a location (not shown) where the trimmed portion 46 is removed and to another location (not shown) where the trimmed can body is transferred to a conveyor for further processing.

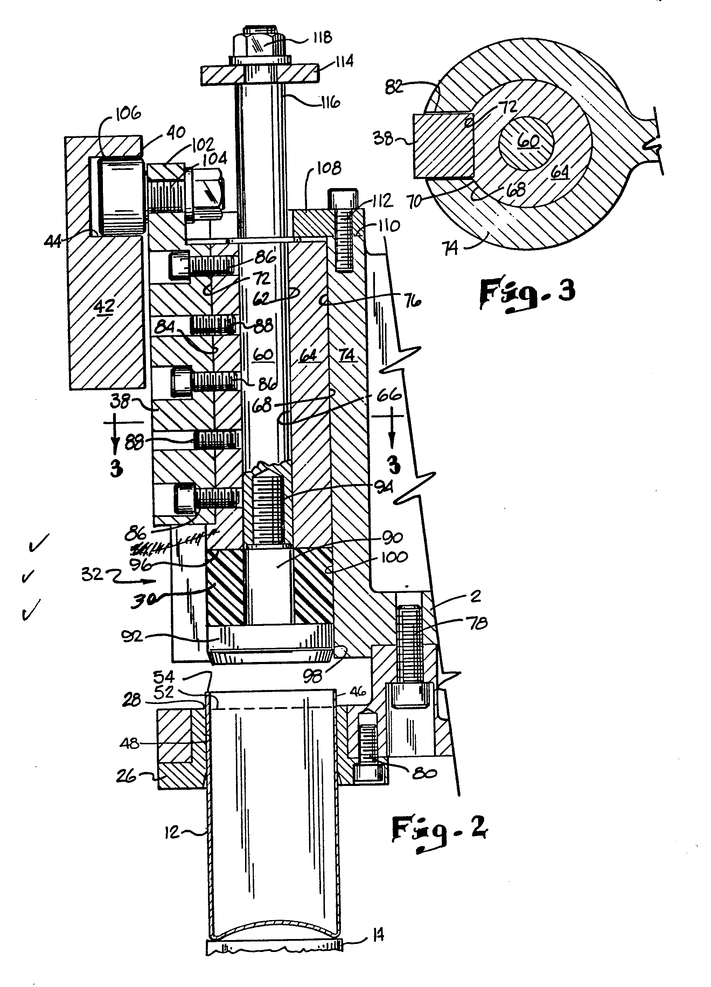

In Fig. 2, there is illustrated the location of various parts of the apparatus after the means 16 has moved the vacuum chuck can locator 14 and, therefore, the can body 12 into a location within the cutting member 26 so that the trimming operation may be performed thereon. A circle 52 along which the untrimmed can body 12 is to be trimmed is radially opposite the cutting edge 28 of the cutting member 26 and is spaced a distance from the open end 54 of the untrimmed can body 12. The elongated member 34 comprises an elongated rod 60 having a cylindrical outer surface 62 and is located within a sleeve 64 having a cylindrical inner surface 66. The cylindrical outer surface 62 and the cylindrical inner surface 66 are dimensioned so as to have a frictional fit therebetween so that the sleeve 64 will move with the rod 60, but also, when the frictional force is overcome, may move relative to the rod 60. The sleeve 64 has a cylindrical outer surface 68 except for a longitudinally extending groove 70 having a planar bottom surface 72. The sleeve 64 is located within a cylinder 74 having a cylindrical inner surface 76. The cylinder 74 is secured to the starwheel 2 by a threaded fastener 78. Also, the cutting member 26 is secured to the starwheel 2 by a threaded fastener 80. The cylinder 74 has a longitudinally extending opening 82 therein and in which the member 38 is located for reciprocal movement therein. The member 38 has a surface 84 in contact with the bottom surface 72 of the sleeve 64 and is secured to the sleeve 64 by a plurality of fasteners 86 and dowels 88.

A stud 90 having an enlarged head 92 is secured in the bottom portion of the rod 60 by a threaded fastener 94. The enlarged head 92 is spaced from the bottom surface 96 of the sleeve 64 so as to form the recess 32. The enlarged head 92 has a cylindrical outer surface 98 having a diameter substantially the same as the diameter of the cylindrical outer surface 68 of the sleeve 64. A resilient, deformable object 30, preferably formed from urethane, is located in the recess 32. The resilient, deformable object 30 has an outer cylindrical surface 100 having a diameter substantially the same as the diameters of the sleeve 64 and the enlarged head 92. The rotatable cam follower 40 is secured to the upper portion 102 of the member 38 by a threaded fastener 104. The rotatable cam follower 40 has a cylindrical surface 106 so that it may rotate over the cam surface 44 in the barrel cam 42.

The cylinder 74 has a stop member 108 secured to the upper surface 120 thereof by a threaded fastener 112. The elongated rod 60 is provided with a stop collar 114 secured to its upper end 116 by a threaded fastener 118. The stop collar 114 and the stop member 108 limit the downward movement of the elongated rod 60 for a purpose to be described below.

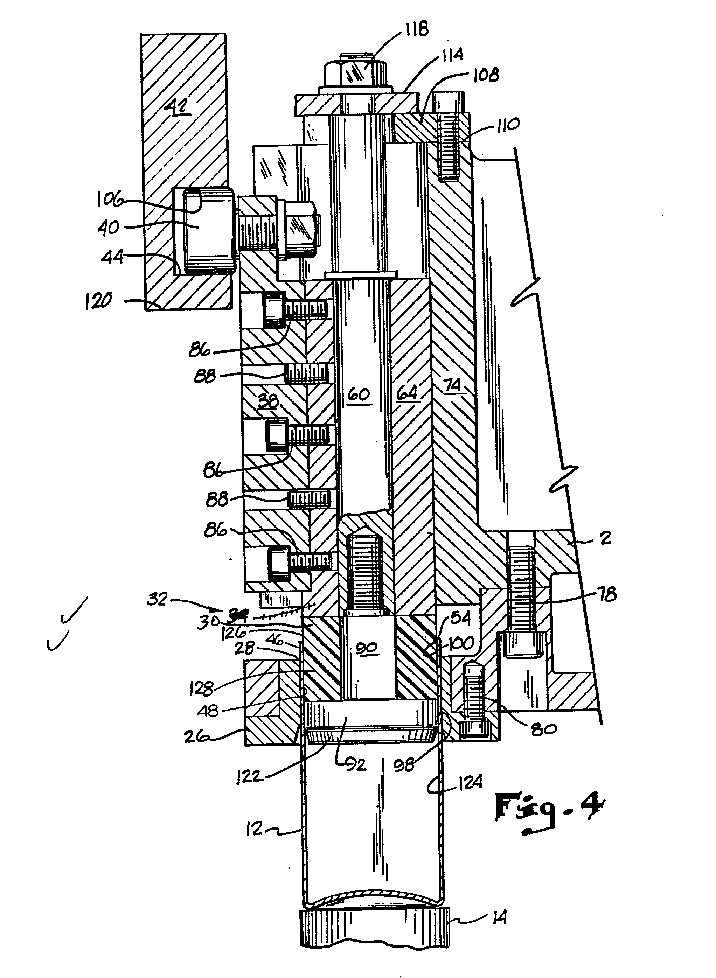

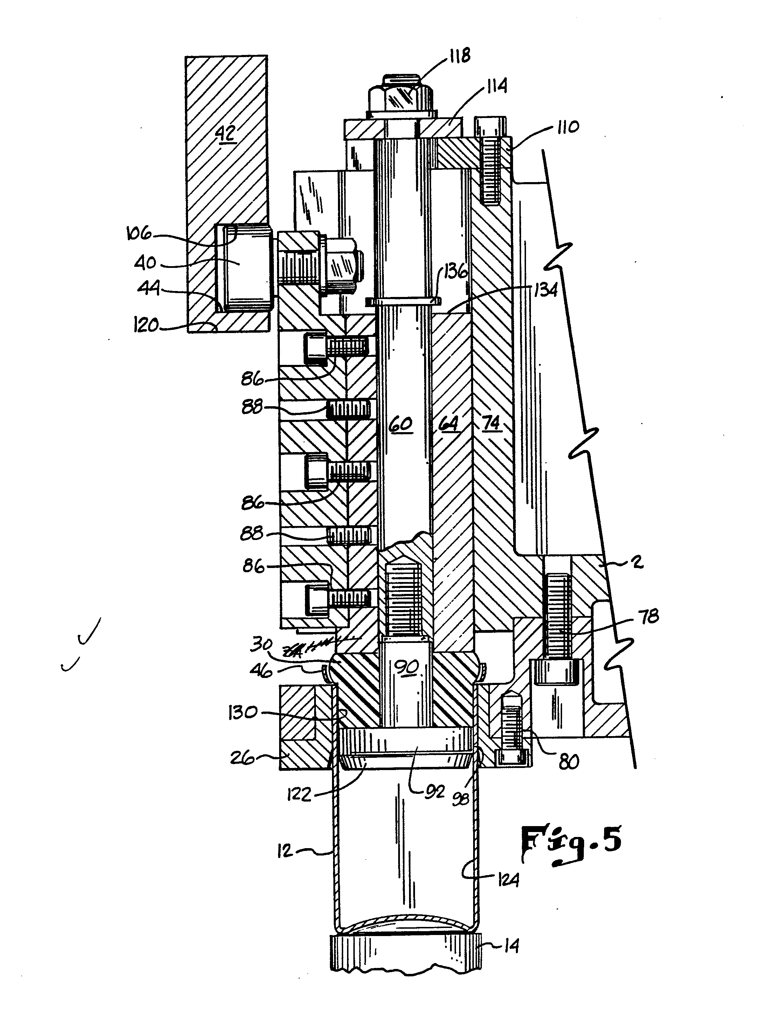

The relative location of the various parts as illustrated in Fig. 4, occurs during the rotation of each turret 8 from the right side of Fig. 1 to the left side of Fig. 1. As illustrated in Fig. 4, the cam surface 44 is now located closer to the bottom 120 of the barrel cam 42. The rotatable cam follower 40 has moved the member 38 and, therefore, the sleeve 64 and the rod 60 downwardly in the cylinder 74. The enlarged head 92 has been moved downwardly to a location within the can body 12. The enlarged head 92 is provided with an inclined surface 122 to ensure entry into the can body 12. The cylindrical outer surface 98 of the enlarged head 92 and the cylindrical outer surface 100 of the resilient, deformable object 30 are substantially in contact with the inner surface 124 of the can body 12. Portions 126 and 128 are located above and below the cutting head 28 in longitudinal directions so that a portion of the resilient, deformable object is radially opposite the cutting head 28. As illustrated in Fig. 4, stop collar 114 on the rod 60 has moved into contact with the stop member 108 on the cylinder 74 to stop the downward movement of the rod 60 and the enlarged head 92.

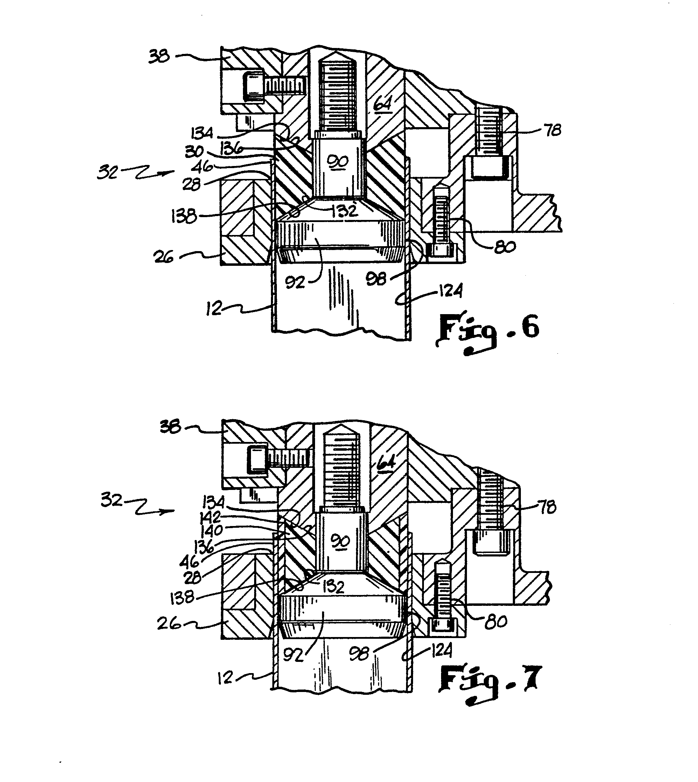

As the turret 8 continues to rotate from the location illustrated in Fig. 4 to the location illustrated in Fig. 5 and the left side of Fig. 1, the cam surface 44 continues to move downwardly toward the bottom 120 of the barrel cam 42. The force applied by the rotatable cam follower 40 on the member 38 is sufficient to overcome the frictional force between the rod 60 and the sleeve 64 so that the sleeve 64 moves downwardly relative to the rod 60 and the enlarged head 92. The continued downward movement of the sleeve 64 applies a force to the resilient, deformable object 30 so that the resilient, deformable object 34 starts to expand in a radially outward direction into contact with the inner surface 124 of the can body 12 and to apply a radially outward directed force thereto. The application of this force to the portion of the can body 12 between the resilient, deformable object 30 and the inner cylindrical surface 48 of the cutting member 26 functions to prevent any longitudinal movement of the can body 12. The continued downward movement of the sleeve 64 increases the deformation of the resilient, deformable object 30 to apply increasing amounts of radially outward directed force to the portion 46 of the can body between the circle 52 and the open end 54 so that the cutting edge 28 will sever that portion 46 away from the remaining portion of the can body 12 as illustrated in Fig. 5.

As the turret 8 continues to rotate, the cam surface 44 moves away from the bottom 120 of the barrel cam 42 so as to move the sleeve 64 upwardly as viewed in Fig. 5. The resilient characteristic of the resilient, deformable object 30 is sufficient to overcome the frictional force between the sleeve 64 and the elongated rod 60 so that the sleeve 64 moves relative to the elongated rod 60 so that the resilient, deformable object 30 returns to its original shape as illustrated in Figs. 2 and 4. As the cam surface 44 continues to move away from the bottom 120 of the barrel cam 42, the relative movement of the sleeve 64 and the elongated rod 60 continues until the upper surface 134 of the sleeve 64 contacts the ring member 136 fixedly mounted on the elongated rod 60. After this contact has been made, the sleeve 64 and the elongated rod 60 move upwardly in unison.

As the turret continues to rotate from the

-10-

left side of Fig. 1 back to the right side of Fig. 1, the rotatable cam follower 20 following the cam surface 24 of the barrel cam 22 moves the vacuum chuck can locator 14 downwardly so that the can body 12 is moved free from its location within the cutting member 26. The trimmed can body is transferred from the turret 8 by suitable means (not shown) to a conveyor for further processing. Also, as the can body 12 is being lowered out of its location within the cutting member 26, suitable means, such as an air nozzle (not shown), are provided to remove the trimmed portion 46 out of the turret and into a suitable scrap collector.

In the embodiment of the invention illustrated in Fig. 6, the upper surface 132 of the enlarged head 92 has a conical configuration with the smallest diameter thereof spaced away from the cylindrical surface 98. Also, the lower surface 134 of the sleeve 64 has a conical configuration with the smallest diameter thereof closer to the enlarged head 92. The resilient, deformable object 30 of this embodiment has a conically shaped upper surface 136 conforming to the conically shaped lower surface 134 of the sleeve 64 and a conically shaped lower surface 138 conforming to the conically shaped upper surface 132 of the enlarged head 92.

The embodiment illustrated in Fig. 7 is similar to the embodiment of Fig. 6 except that the resilient, deformable body 30 is formed by two separate portions comprising an inner ring shaped portion 140 and an outer ring shaped portion 142.

The resilient, deformable object 30 in the embodiments illustrated in Figs. 1 - 6 is formed from urethane having a durometer between about 85 to 95 Shore A and preferably of about 90 Shore A. In the embodiment of Fig. 7 the inner ring shaped portion 140 is formed from urethane having a duro-

-11-

meter between about 40 to 60 Shore A and preferably about 50 Shore A.  The outer ring shaped portion is formed from urethane having a durometer of between about 85 to 95 Shore A and preferably of about 90 Shore A.

It is contemplated that the inventive concepts herein described may be variously otherwise embodied and it is intended that the appended claims be construed to include alternative embodiments of the invention except insofar as limited by the prior art.

-1-

## C L A I M S

1.      Apparatus for trimming away a portion of a can body adjacent its open end comprising:

a cutting member having an upper surface, a lower surface and an opening having a generally cylindrical inner surface extending therebetween;

a generally circular cutting edge formed at the intersection of said generally cylindrical inner surface and said upper surface;

support means for positioning a can body having an open end and a closed end and a longitudinal axis within said cutting member so that the portion of said can body to be trimmed away projects upwardly from said upper surface and the next adjacent portion of said can body is radially opposite said generally cylindrical inner surface and for supporting said can body in such position;

a resilient, deformable object;

mounting means on which said resilient, deformable object is mounted;

said mounting means having a longitudinal axis;

force applying means having a longitudinal axis;

said mounting means attached to said force applying means for movement therewith but to permit relative longitudinal movement therebetween;

moving means for moving said force applying means and therefore also said mounting means toward said can body so that said mounting means moves into said can body;

movement limiting means to stop the movement of said mounting means to position said resilient, deformable object within said can body so that portions of said resilient, deformable object are radially opposite to said portion of said can body to be trimmed away, said cutting edge and at least a portion of said next adjacent portion;

said moving means continuing the movement of

CASE: ACC. 85-50

said force applying means to apply a force to deform said resilient, deformable object in radially outward directions to force said at least a portion of said next adjacent portion against said generally cylindrical inner surface so as to prevent longitudinal movement thereof and to force said portion of said can body to be trimmed away against and over said cutting edge to trim it from the can body; and

said moving means moving said force applying means in a direction away from said can body and relative to said mounting means so that said resilient, deformable object will resile to its original shape and then moving said mounting means therewith so as to remove said mounting means out of said can body.

2. Apparatus as in claim 1 wherein:

said mounting means comprises an elongated rod having an enlarged head at one end thereof, said enlarged head being movable into and out of said can body;

said force applying means comprises a sleeve surrounding a portion of said elongated rod, said sleeve being in frictional engagement with said elongated rod;

said resilient, deformable object mounted on said elongated rod and located between said enlarged head and said sleeve; and

said moving means reciprocating said sleeve so as to move said enlarged head and said resilient, deformable object into and out of said can body and to apply said force to deform said resilient deformable object.

3. Apparatus as in claim 2 and further comprising;

said enlarged head having a generally cylindrical outer surface;

said sleeve having a generally cylindrical outer surface with a diameter substantially equal to the diameter of said enlarged head;

said sleeve being spaced a distance from said enlarged head so as to form an annular cavity around said elongated rod;

said resilient, deformable object having a ring shaped configuration and having an outer diameter substantially equal to the outer diameter of said enlarged head and the diameter of said sleeve; and

said resilient, deformable object being located in said annular cavity.

4.      Apparatus as in claim 3 wherein:

said diameter of said enlarged head and said diameter of said resilient, deformable object in said undeformed state are substantially equal to the inner diameter of said can body.

5.      Apparatus as in claim 4 wherein:

said diameter of said generally cylindrical inner surface of said cutting member is substantially equal to the outer diameter of said can body.

6.      Apparatus as in claim 5 and further comprising:

said sleeve having a conically shaped surface facing said enlarged head with the smallest diameter of said conically shaped surface of said sleeve closer to said enlarged head;

said enlarged head having a conically shaped surface facing said sleeve with the smallest diameter of said conically shaped surface of said enlarged head closer to said sleeve; and

said resilient, deformable object having conically shaped surfaces conforming to and in contact with each of said conically shaped surfaces of said sleeve and said enlarged head.

7.      Apparatus as in claim 6 wherein said resilient, deformable object comprises:

an inner ring shaped portion formed from urethane;

an outer ring shaped portion having an inner surface in contact with an outer surface of said inner ring shaped portion and formed from urethane; and

said outer ring shaped portion having a durometer substantially greater than the durometer of said inner ring shaped portion.

8.    Apparatus as in claim 5 and further comprising:
      means for preventing rotation of said sleeve during said reciprocation thereof.

9.    Apparatus as in claim 8 wherein said means for preventing rotation comprises:
      a hollow cylinder surrounding said sleeve;
      an elongated narrow opening in said hollow cylinder extending in a direction generally parallel to said longitudinal axis of said hollow cylinder;
      an elongated narrow member mounted for sliding movement in said elongated narrow opening;
      means for securing said cam follower to said elongated narrow member; and
      means for securing said elongated narrow member to said sleeve.

10.   A method for trimming away a portion of a can body adjacent its open end comprising:
      providing a cutting member having an upper surface, a lower surface and an opening having a generally cylindrical inner surface extending therebetween;
      forming a generally circular cutting edge at the intersection of said generally cylindrical inner surface and said upper surface;
      positioning a can body having an open end and a closed end and a longitudinal axis within said cutting member so that the portion of said can body to be trimmed away projects upwardly from said upper surface and the next adjacent portion of said can body is radially opposite said generally cylindrical inner surface and supporting said can body in such position;
      mounting a resilient, deformable object on a mounting means having a longitudinal axis;
      attaching said mounting means to a force applying means, having a longitudinal axis, for movement therewith but permitting relative longitudinal movement therebetween;

-5-

moving said force applying means and therefore
also said mounting means toward said can body so that
said mounting means moves into said can body;

stopping the movement of said mounting means
to position said resilient, deformable object within said
can body so that portions of said resilient, deformable
object are radially opposite to said portion of said
can body to be trimmed away, said cutting edge and at
least a portion of said next adjacent portion;

continuing the movement of said force applying
means to apply a force to deform said resilient, deformable object in radially outward directions to force said
at least a portion of said next adjacent portion against
said generally cylindrical inner surface so as to prevent
longitudinal movement thereof and to force said portion
of said can body to be trimmed away against and over said
cutting edge to trim it from the can body; and

moving said force applying means in a direction
away from said can body and relative to said mounting
means so that said resilient, deformable object will
resile to its original shape and then moving said mounting means therewith so as to remove said mounting means
out of said can body.

0236004

Fig.1

0236004

Fig. 3

Fig. 2

Fig-4

0236004

Fig.5

Fig.6

Fig.7

European Patent Office

**EUROPEAN SEARCH REPORT**

0236004

Application number

EP 87 30 1348

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 294 722 (ROLLS-ROYCE) <br> * Whole document * <br> --- | 1-5,10 | B 23 D 31/00 |
| A | US-A-3 295 347 (FUESSLE) <br> --- | | |
| A | DE-A-2 101 548 (SNIA VISCOSA) <br> --- | | |
| A | US-A-4 181 050 (STROOBANTS) <br> ----- | | |

|  |
|---|
| **TECHNICAL FIELDS SEARCHED (Int. Cl.4)** |
| B 23 D <br> B 21 D <br> B 44 B |

The present search report has been drawn up for all claims

| Place of search | Date of completion of the search | Examiner |
|---|---|---|
| THE HAGUE | 11-05-1987 | BERGHMANS H.F. |